# EUROPÄISCHE PATENTSCHRIFT

(11) **EP 1 688 205 B1**
(45) Veröffentlichungstag und Bekanntmachung des Hinweises auf die Patenterteilung: **02.12.2015**
(21) Anmeldenummer: 06001833.0
(22) Anmeldetag: 30.01.2006
(51) Int. Cl.: B23K 11/30, B23K 37/00

(54) **Vorrichtung zum Kühlen von Schweisskappen**
Apparatus for cooling of electrode tips
Dispositif de refroidissement des embouts des électrodes

(30) Priorität: 03.02.2005 DE 202005001738 U
(43) Veröffentlichungstag der Anmeldung: 09.08.2006
(73) Patentinhaber: Bürkert Werke GmbH, 74653 Ingelfingen (DE)
(72) Erfinder: Lotha, Hartmuth, 74653 Kupferzell (DE)
(74) Vertreter: Prinz & Partner mbB

(56) Entgegenhaltungen:
- EP-A- 0 433 586
- EP-A- 1 224 996
- EP-A- 1 484 557
- DE-A1- 3 139 376
- DE-C1- 3 416 733
- US-A- 4 742 841
- PATENT ABSTRACTS OF JAPAN Bd. 1999, Nr. 08, 30. Juni 1999 (1999-06-30) & JP 11 058029 A (ARACO CORP), 2. März 1999 (1999-03-02)
- PATENT ABSTRACTS OF JAPAN Bd. 010, Nr. 238 (M-508), 16. August 1986 (1986-08-16) & JP 61 071190 A (IKEDA BUSSAN CO LTD), 12. April 1986 (1986-04-12)

## Beschreibung

Die Erfindung betrifft eine Vorrichtung zum Kühlen von Schweißkappen einer Schweißvorrichtung mit einer Kühlleitung und einem Kühlmittel.

In der Roboter-Schweißtechnik kommen Schweißzangen mit austauschbaren Schweißkappen zum Einsatz, deren Verschleiß durch eine gute Kühlung deutlich verzögert werden kann. Hierzu sind Kühlsysteme mit Kühlleitungen vorgesehen, in denen z.B. mit Glykol und weiteren Additiven versetztes Wasser als Kühlmittel verwendet wird. Bei einem Wechsel der Schweißkappen wird die Kühlleitung im Bereich der Schweißkappen automatisch abgedichtet, um einen Austritt des unter Druck stehenden Kühlmittels zu verhindern. Da trotz des Einsatzes von Schnellschließventilen die Kühlleitung nicht sofort abgedichtet werden kann, kommt es aufgrund des weiterhin in dem abgedichteten Abschnitt der Kühlleitung herrschenden Drucks zu einem unerwünschten Verspritzen von Kühlmittel.

Aus der EP 0 433 586 A ist eine Vorrichtung zum Kühlen von Schweißkappen einer Schweißvorrichtung mit einem Absaugsystem bekannt, das für eine Absperrung eines Teils der Kühlleitung sorgt. Der abgesperrte Teil der Leitung wird mittels eines Absaugsystems komplett entleert, was den Nachteil hat, daß beim Wiederbefüllen unvermeidbar störende Luft in die Leitung gerät.

Aus mehreren Druckschriften sind Vorrichtungen der eingangs genannten Art bekannt, bei denen auf unterschiedliche Weise versucht wird, einen unerwünschten Kühlmittelverlust zu vermeiden. Gemäß der JP 11058029 A ist hierzu eine Ventilanordnung mit Sperrventilen und Rückschlagventilen vorgesehen. Gemäß der JP 61071190 ist eine Ventilanordnung mit einem Abfluß vorgesehen. Gemäß der DE 34 16 733 C1 ist ein federbelasteter Schieber vorgesehen, der in Montagestellung sowohl die Kühlflüssigkeitsabfuhr und -zufuhr sperrt und beides in Arbeitsstellung freigibt. Gemäß der US-A-4 742 841 ist eine Ventilanordnung vorgesehen. Gemäß der DE 31 39 376 A1 sind federbelastete Ventile und ein verschiebbar gelagertes Vorlaufröhrchen vorgesehen.

Die Erfindung schafft eine Vorrichtung zum Kühlen von Schweißkappen, bei der ein Kühlmittelverlust bei einem Wechsel der Schweißkappen effektiv vermieden wird.

Dies wird durch die Merkmalskombination des Anspruchs 1 erreicht.

Gemäß der Erfindung ist bei einer Vorrichtung der eingangs genannten Art vorgesehen, daß bei einem Entfernen der Schweißkappen das Kühlmittel in der Kühlleitung unter Druck eingeschlossen wird, wobei das Kühlmittel nach dem Einschließen sofort in eine Expansionskammer einer an die Kühlleitung angeschlossenen Expansionseinrichtung einströmen kann, so daß der Druchk in der Kühlleitung reduziert wird. Die Erfindung beruht auf der Erkenntnis, daß das Verspritzen von Kühlmittel beim Schließen der Ventile durch den hohen Druck in der Kühlleitung verursacht wird. Die Expansionskammer schafft daher bei einem Schweißkappenwechsel die Möglichkeit einer sofortigen Druckreduzierung in der Kühlleitung, so daß kein unter hohem Druck stehendes Kühlmittel austreten kann. Gegenüber Kühlvorrichtungen, bei denen ein Teil der Kühlleitung abgesperrt und komplett entleert wird, arbeitet die erfindungsgemäße Vorrichtung nach einem anderen Funktionsprinzip. Die Expansionskammer schafft durch Entspannen einen Druckausgleich. Die Kammer befüllt sich nur so lange, bis der Überdruck abgebaut ist. Die Kühlleitung bleibt mit Kühlmittel befüllt.

Die Expansionskammer ist gemäß der Erfindung in einem Gehäuse gebildet und durch eine Fläche eines im Gehäuse verschiebbaren Kolbens begrenzt. Somit kann durch eine Verschiebung des Kolbens auf einfache Weise das Volumen der Expansionskammer vergrößert werden.

Bei der bevorzugten Ausführungsform der Erfindung steht die Expansionskammer in direkter Strömungsverbindung mit dem Kühlmittel, d.h. das Kühlmittel kann sich unmittelbar durch ein Einströmen in die Expansionskammer entspannen.

Um die Bewegung des Kolbens in Expansionsrichtung zu dämpfen, kann der Kolben mit einem Gegendruck beaufschlagt werden.

Um den Gegendruck an die spezifischen Gegebenheiten, insbesondere an das im abgedichteten Kühlleitungsabschnitt eingeschlossene Volumen, anzupassen, ist vorzugsweise ein pneumatisches Vorsteuerventil und eine Druckbegrenzungseinrichtung zur Einstellung des Gegendrucks vorgesehen. Als Vorsteuerventil und Druckbegrenzungseinrichtung können Standardkomponenten eingesetzt werden.

Ein Kolben, der eine Dichtung aufweist, die die Expansionskammer auf der einen Kolbenseite von einer auf der anderen Kolbenseite angeordneten Gegendruckkammer trennt, erweist sich als besonders vorteilhaft. Dadurch bleibt der pneumatische Teil der Vorrichtung (Vorsteuerventil, Druckbegrenzungseinrichtung, Gegendruckkammer) vom fluidischen Teil der Vorrichtung (Kühlleitung, Expansionskammer) getrennt, und es erfolgt keine Mischung der beiden Medien.

Eine Weiterbildung der Erfindung sieht vor, daß der Kolben mit wenigstens zwei axial voneinander beabstandeten umlaufenden Dichtungen gegen das Gehäuse abgedichtet ist und zwischen den beiden Dichtungen ein Zwischenraum gebildet ist, wobei das Gehäuse im Bereich des Zwischenraums eine Öffnung aufweist. Dieser besondere Aufbau ermöglicht eine Kontrolle der Abdichtung zwischen dem pneumatischen und dem fluidischen Teil der Vorrichtung. Weist beispielsweise die dem fluidischen Teil zugewandte Dichtung ein Leck auf, gelangt Kühlmittel in den Zwischenraum und tritt durch die Öffnung aus. Im anderen Fall, wenn also die dem pneumatischen Teil zugewandte Dichtung defekt ist, tritt Luft aus der Öffnung aus. Durch Anschließen eines geeigneten Detektors an die Öffnung können somit die Dichtungen fortlaufend kontrolliert werden.

Weitere Merkmale und Vorteile der Erfindung ergeben sich aus der nachfolgenden Beschreibung einer bevorzugten Ausführungsform und aus den beigefügten Zeichnungen, auf die Bezug genommen wird. In den Zeichnungen zeigen:
- Figur 1 eine Seitenansicht einer erfindungsgemäßen Vorrichtung; und
- Figur 2 ein Prinzipschaltbild der Vorrichtung aus Figur 1.

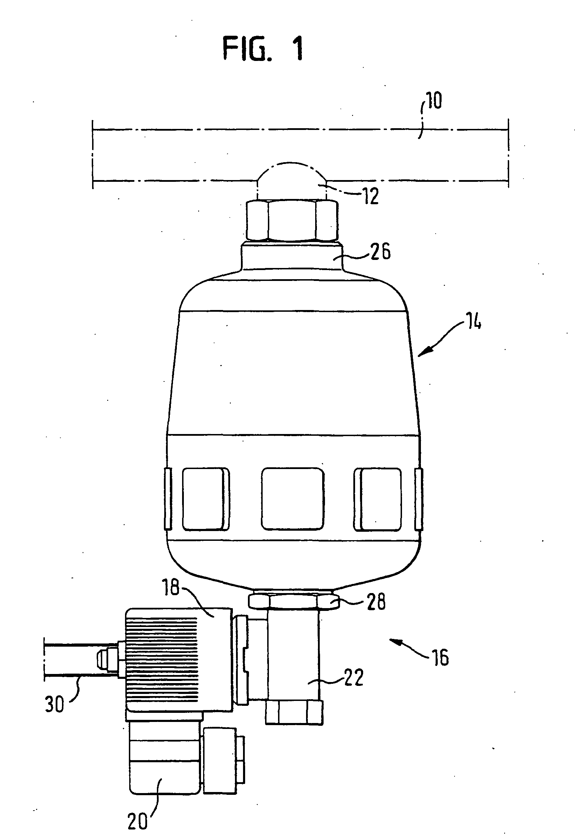

In Figur 1 ist eine Kühlleitung 10 eines Kühlsystems für die Schweißkappen einer Roboter-Schweißzange dargestellt. Die Kühlleitung 10 hat einen nach unten weisenden Gewindeanschluß 12, an den ein Expansionszylinder 14 angeschraubt ist. Der Expansionszylinder 14 ist Teil einer Expansionseinrichtung 16, zu der auch ein als Magnetventil ausgebildetes Vorsteuerventil 18 mit einer Gerätesteckdose 20 und eine Druckbegrenzungseinrichtung in Form einer Drossel 22 gehören. Die Drossel 22 kann, wie im dargestellten Ausführungsbeispiel, in das Vorsteuerventil 18 integriert sein.

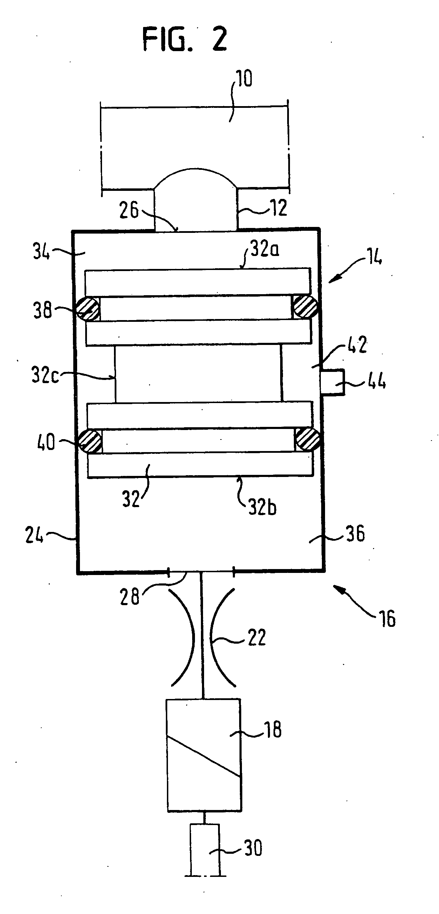

Insbesondere aus Figur 2 geht der grundlegende Aufbau der Expansionseinrichtung 16 hervor. Der Expansionszylinder 14 weist ein im wesentlichen zylinderartiges Gehäuse 24 mit zwei stirnseitigen Anschlüssen 26, 28 auf. Der erste Anschluß 26 ist mit der Kühlleitung 10, der zweite Anschluß 28 mit der Drossel 22 verbunden. Das Vorsteuerventil 18 ist an eine Druckluftleitung 30 angeschlossen und wird elektrisch gesteuert.

Der Innenraum des Expansionszylinders 14 ist durch einen axial verschiebbaren Kolben 32 in eine Expansionskammer 34 und eine Gegendruckkammer 36 unterteilt. Die beiden Kammern 34, 36 sind auf ihren einander zugewandten Seiten durch die axial verschiebbaren Stirnflächen 32a bzw. 32b des Kolbens 32 begrenzt. Der Kolben 32 ist zum Gehäuse 24 hin durch zwei Dichtringe 38, 40 abgedichtet, so daß der pneumatische Teil der Expansionseinrichtung 16 unterhalb der Dichtung 40 vom fluidischen Teil der Expansionseinrichtung oberhalb der Dichtung 38 getrennt ist.

Zwischen den beiden Dichtungen 38, 40 weist der Kolben eine Einschnürung 32c auf, wodurch ein ringförmiger Zwischenraum 42 gebildet ist, dessen Lage mit der Kolbenbewegung variiert. Der Zwischenraum 42 ist nach außen durch die Wand des Gehäuses 24 begrenzt, wobei im Bereich des Zwischenraums 42 eine (nur in Figur 2 dargestellte) Gehäuseöffnung 44 vorgesehen ist. Die axiale Ausdehnung des Zwischenraums 42 und die Anordnung der Gehäuseöffnung 44 sind so gewählt, daß die Gehäuseöffnung 44 in jeder im normalen Betrieb der Expansionseinrichtung auftretenden Kolbenstellung in Strömungsverbindung mit dem Zwischenraum 42 steht.

Im folgenden wird die Funktionsweise der erfindungsgemäßen Vorrichtung erläutert. Bei einem Wechsel der Schweißkappen der Roboter-Schweißzange wird die Kühlleitung 10 automatisch durch Schnellschließventile abgedichtet. Dadurch wird das Kühlmittel in der Kühlleitung 10 unter Druck eingeschlossen. Der Druck wird jedoch sofort reduziert, da das Kühlmittel in die Expansionskammer 34 des Expansionszylinders 14 einströmen und den Kolben 32 unter Ausdehnung der Expansionskammer 34 verschieben kann. Der mittels des Vorsteuerventils 18 und der Drossel 22 eingestellte Druck in der Gegendruckkammer 36 ist dabei so gewählt, daß die Kolbenbewegung in geeignetem Maße gedämpft wird. Aufgrund der sofortigen Druckreduzierung kommt es zu keinem Verspritzen von Kühlmittel im Bereich der Schnellschließventile.

Nach dem Schweißkappenwechsel wird der Kolben 32 durch den von der Druckleitung 30 bereitgestellten und durch das Vorsteuerventil 18 und die Drossel 22 geeignet eingestellten Gegendruck wieder in Richtung Kühlleitung 10 verschoben. Die Expansionskammer 34 verkleinert sich dadurch wieder, und kann sich bei einem weiteren Schweißkappenwechsel erneut ausdehnen.

Ein besonderer Vorteil der beschriebenen Vorrichtung liegt in der Medientrennung, d.h. die Druckluft zur Bereitstellung des Gegendrucks für den Kolben 32 vermischt sich während des Betriebs der Vorrichtung nicht mit dem Kühlmittel.

Um einen störungsfreien Betrieb der erfindungsgemäßen Vorrichtung zu gewährleisten, ist der Expansionszylinder 14 unterhalb der Kühlleitung 10 angeordnet und vertikal ausgerichtet.

Die in Strömungsverbindung mit dem Zwischenraum 42 stehende Gehäuseöffnung 44 dient der Kontrolle der Dichtungen 38, 40. Im Falle einer nicht einwandfreien Dichtung 38 gelangt Kühlmittel in den Zwischenraum 42 und tritt aus diesem durch die Gehäuseöffnung 44 aus. Die Feststellung eines solchen Kühlmittelaustritts ist also ein direkter Nachweis für ein Leck der Dichtung 38. Dagegen ist ein Austritt von Druckluft ein Zeichen für eine defekte Dichtung 40. In beiden Fällen ist aber ein sofortiger Austausch der Dichtungen nicht notwendig, wenn das durch die Gehäuseöffnung 44 ausgetretene Medium zurückgehalten wird, da normalerweise die andere Dichtung noch intakt ist und die Dichtungsfunktion auch alleine übernehmen kann.

## Patentansprüche

1. Vorrichtung zum Kühlen von Schweißkappen einer Schweißvorrichtung, mit einer Kühlleitung (10) und einem Kühlmittel, **dadurch gekennzeichnet, daß** bei einem Entfernen der Schweißkappen das Kühlmittel in der Kühlleitung(10) unter Druck eingeschlossen wird, wobei das Kühlmittel nach dem Einschließen sofort in eine Expansionskammer (34) einer an die Kühlleitung (10) angeschlossenen Expansionseinrichtung (16) einströmen kann, so daß der Druck in der Kühlleitung (10) reduziert wird, und wobei die Expansionskammer (34) in einem Gehäuse (24) gebildet und durch eine Fläche (32a) eines im Gehäuse (24) verschiebbaren Kolbens (32) begrenzt ist.

2. Vorrichtung nach Anspruch 1, **dadurch gekennzeichnet, daß** die Expansionskammer (34) in direkter Strömungsverbindung mit dem Kühlmittel steht.

3. Vorrichtung nach Anspruch 1 oder 2, **dadurch gekennzeichnet, daß** der Kolben (32) mit einem Gegendruck beaufschlagbar ist.

4. Vorrichtung nach Anspruch 3, **dadurch gekennzeichnet, daß** der Gegendruck durch eine Steuerung einstellbar ist.

5. Vorrichtung nach Anspruch 4, **dadurch gekennzeichnet, daß** der Gegendruck die einzige Steuergröße für den Kolben (32) ist.

6. Vorrichtung nach einem der Ansprüche 3 bis 5, **gekennzeichnet durch** ein pneumatisches Vorsteuerventil (18) und eine Druckbegrenzungseinrichtung (22) zur Einstellung des Gegendrucks.

7. Vorrichtung nach einem der vorhergehenden Ansprüche, **dadurch gekennzeichnet, daß** der Kolben (32) eine Dichtung (38, 40) aufweist, die die Expansionskammer (34) auf der einen Kolbenseite von einer auf der anderen Kolbenseite angeordneten Gegendruckkammer (36) trennt.

8. Vorrichtung nach Anspruch 7, **dadurch gekennzeichnet, daß** der Kolben (32) mit wenigstens zwei axial voneinander beabstandeten umlaufenden Dichtungen (38, 40) gegen das Gehäuse (24) abgedichtet ist und zwischen den beiden Dichtungen (38, 40) ein Zwischenraum (42) gebildet ist, wobei das Gehäuse (24) im Bereich des Zwischenraums (42) eine Öffnung (44) aufweist.

9. Vorrichtung nach einem der vorhergehenden Ansprüche, **dadurch gekennzeichnet, daß** die Expansionskammer (34) im eingebauten Zustand der Expansionseinrichtung (16) unterhalb der Kühlleitung (10) angeordnet ist.

## Claims

1. A device for cooling welding caps of a welding apparatus, comprising a cooling pipe (10) and a cooling agent, **characterized in that** when the welding caps are removed, the cooling agent is enclosed in the cooling pipe (10) under pressure, wherein the cooling agent, after being enclosed, can immediately flow into an expansion chamber (34) of an expansion device (16) connected to the cooling pipe (10), so that the pressure in the cooling pipe (10) is reduced, and wherein the expansion chamber (34) is formed in a housing (24) and delimited by a surface (32a) of a piston (32) which is displaceable in the housing (24).

2. The device according to claim 1, **characterized in that** the expansion chamber (34) is in direct fluid communication with the cooling agent.

3. The device according to claim 1 or 2, **characterized in that** the piston (32) is adapted to be acted upon with a back pressure.

4. The device according to claim 3, **characterized in that** the back pressure is adjustable by a control.

5. The device according to claim 4, **characterized in that** the back pressure is the only variable for controlling the piston (32).

6. The device according to any of claims 3 to 5, **characterized by** a pneumatic pilot valve (18) and a pressure limiting means (22) for adjusting the back pressure.

7. The device according to any of the preceding claims, **characterized in that** the piston (32) includes a seal (38, 40) which separates the expansion chamber (34) on one side of the piston from a back pressure chamber (36) arranged on the other side of the piston.

8. The device according to claim 7, **characterized in that** the piston (32) is sealed from the housing (24) by at least two surrounding seals (38, 40) which are axially spaced from each other, and **in that** an intermediate space (42) is formed between the two seals (38, 40), the housing (24) having an aperture (44) in the region of the intermediate space (42).

9. The device according to any of the preceding claims, **characterized in that** the expansion chamber (34) is arranged below the cooling pipe (10) in the installed state of the expansion device (16).

## Revendications

1. Dispositif de refroidissement de capuchons de soudage d'un dispositif de soudage, présentant une conduite de refroidissement (10) et un agent de refroidissement, **caractérisé en ce que** lors d'un retrait des capuchons de soudage, l'agent de refroidissement est renfermé sous pression dans la conduite de refroidissement (10), l'agent de refroidissement, après avoir été renfermé, pouvant immédiatement s'écouler dans une chambre à détente (34) d'un moyen à détente (16) raccordé à la conduite de refroidissement (10), de sorte que la pression dans la conduite de refroidissement (10) est réduite, et la chambre à détente (34) étant réalisée dans un boîtier (24) et étant délimitée par une face (32a) d'un piston (32) qui est apte à être déplacer dans le boîtier (24).

2. Dispositif selon la revendication 1, **caractérisé en ce que** la chambre à détente (34) est en communication fluidique directe avec l'agent de refroidissement.

3. Dispositif selon la revendication 1 ou 2, **caractérisé en ce que** le piston (32) est apte à être sollicité par une contrepression.

4. Dispositif selon la revendication 3, **caractérisé en ce que** la contrepression est ajustable par une commande.

5. Dispositif selon la revendication 4, **caractérisé en ce que** la contrepression est la seule grandeur de commande pour le piston (32).

6. Dispositif selon l'une des revendications 3 à 5, **caractérisé par** une soupape pilote pneumatique (18) et un moyen de limitation de pression (22) pour ajuster la contrepression.

7. Dispositif selon l'une des revendications précédentes, **caractérisé en ce que** le piston (32) présente un joint (38, 40) qui sépare la chambre à détente (34) d'un côté du piston d'une chambre de contrepression (36) agencée de l'autre côté du piston.

8. Dispositif selon la revendication 7, **caractérisé en ce que** le piston (32) est étanché par rapport au boîtier (24) par au moins deux joints (38, 40) périphériques axialement espacés l'un de l'autre et **en ce qu'**un espace (42) est formé entre les deux joints (38, 40), le boîtier (24) présentant un orifice (44) dans la zone de l'espace (42).

9. Dispositif selon l'une des revendications précédentes, **caractérisé en ce que** la chambre à détente (34) est agencée au-dessous de la conduite de refroidissement (10) à l'état monté du moyen à détente (16).
